# EUROPEAN PATENT APPLICATION

(11) **EP 0 990 381 A1**
(43) Date of publication of application: **05.04.2000**
(21) Application number: 99203172.4
(22) Date of filing: 28.09.1999
(51) Int. Cl.: A01B 59/041, B60D 1/14

(54) **System of lower arms for three-point hitches, having lateral stabilisers, in particular for special narrow-track tractors.**

(30) Priority: 29.09.1998 IT BO980550
(71) Applicant: CBM S.p.A., 41100 Modena (IT)
(72) Inventor: Cornia, Enrico Maria, 41100 Modena (IT)
(74) Representative: Provvisionato, Paolo

(57) **Abstract**

A system of lower arms for three-point hitches, in particular for special narrow-track tractors, comprises two lower lateral arms (10) and two respective lateral stabilisers (12), of hydraulic or mechanical type. In the connection region between a lateral stabiliser (12) and a respective lower arm (10), the lower arm has a laterally open portion defined by a pair of parallel and spaced plates (15) which are secured to two opposing elongate bars (13, 14). Each lateral stabiliser (12) is connected to the respective lower arm (10) by means of a pin-slot connection.

## Description

The present invention relates to a system of lower arms for three-point hitches having lateral stabilisers, in particular for special narrow-track tractors.

Three-point hitches are mormally used on agricultural tractors for the connection of agricultural equipment and the like, and comprise two lower lifting arms and associated upright tie-rods, and a central upper arm, called a third point or upper strut. Lower arms of known type are generally constituted by a rectilinear bar, of rectangular cross-section, which is articulated at one of its ends to the tractor and which is provided at the other end with a device for coupling to the item of agricultural equipment, such as, for example, a hooked hitch for rapid attachment or a rotula ball joint.

The lower arms are articulated to the tractor in such a manner that they can oscillate both vertically and laterally. The lateral oscillation of the lower arms is controlled by lateral stabilisers which define the travel-limit stops of the arms and also dampen any movements thereof that are too abrupt. The lateral stabilisers may also be locked in order to fix the lower arms in a specific position. The width of the arc of lateral oscillation of the lower arms is defined by specific standards and must at any rate be such as to prevent the lower arms or the lateral stabilisers from colliding with components of the tractor in whatever state of operation. In particular, the maximum inward excursion of a lower arm is limited by the presence of the power take-off, the central tow hook and by its protective structure, while the maximum outward excursion is limited by the rear wheels of the tractor.

Some agricultural activities are carried out between rows of plants, for example in vineyards, orchards and the like, and, to that end, narrower tractors than those traditionally used for agricultural work in open fields are used. The small space in the rear portion of such tractors limits the arc of lateral oscillation of the lower arms to a greater extent than in the case of standard tractors, in particular owing to the space requirement of the protective structure of the tow hook.

Such excessive limitation of the arc of lateral oscillation of the lower arms, in addition to being incompatible with some standards in this sector, is definitely disadvantageous for the user because, in agricultural work in vineyards, orchards and the like, it limits the possibility of making optimum use of the agricultural equipment coupled to the three-point hitch and drawn by the tractor.

The object of the present invention is therefore to overcome the disadvantages indicated above by providing a system of lower arms and associated lateral stabilisers, by means of which system good width of lateral oscillation of the lower arms is obtained even in special narrow tractors, while reliably ensuring non-interference with the structure of the tractor and with the other components mounted thereon. A further object of the invention is to provide a system of lower arms and associated lateral stabilisers which is simple and economical to manufacture and which does not require additional or more onerous maintenance than that required by systems adopted in normal tractors.

In order to achieve the objects indicated above, the invention relates to a system of lower arms and associated lateral stabilisers having the features indicated in the claims which follow.

Further features and advantages of the invention will emerge from the following description of a preferred embodiment, with reference to the appended drawings which are given by way of non-limiting example and in which;
- Figure 1 is a plan view of the system of the present invention which shows the space requirement and the oscillation possibilities of the lower arms relative to the rear structures of a special narrow tractor, and
- Figure 2 is a perspective view of portion of lower arm of Figure 1, in the region that is to be coupled to the associated lateral stabiliser.

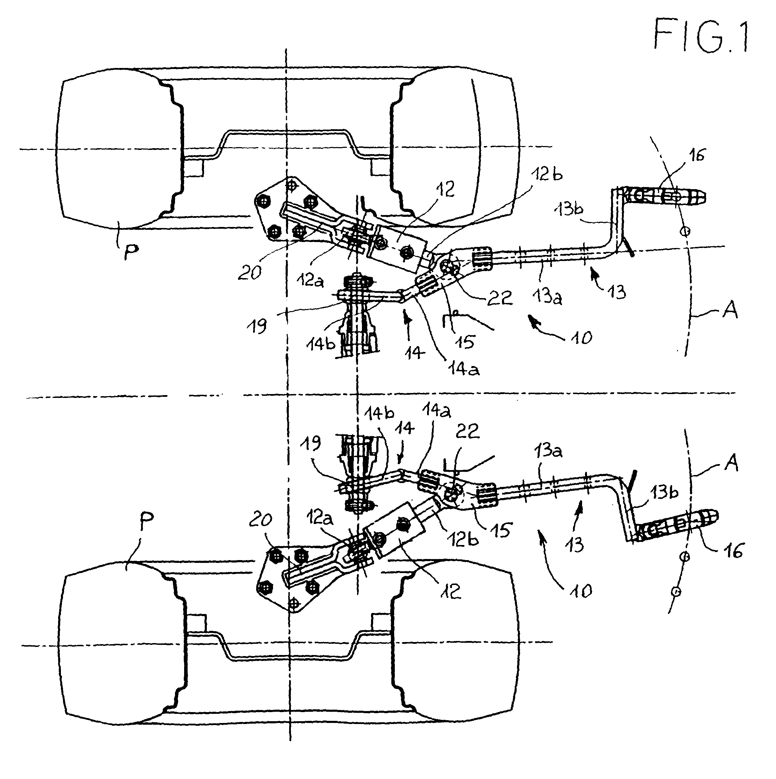

Referring now to Figure 1, a system of three-point hitches is mounted in the rear portion of a special narrow tractor, between the two rear tyres P, and comprises two lower lifting arms which are generally indicated by the reference numeral 10 and which are articulated in known manner to the structure of the tractor by means of ball joints 19. Two lateral stabilisers 12, which are preferably, but not necessarily, of a hydraulic type having a single-acting piston, are articulated at one end 12a to a respective fork-shaped element 20 which is secured to the rear structure of the tractor, and, at the other end 12b, to the lower arms 10.

Each lower arm 10 comprises a pair of elongate bars 13, 14 having a preferably rectangular cross-section which are connected to one another with the interposition of two shaped plates 15 which are vertically spaced from one another and to which the end 12b of the respective lateral stabiliser 12 is articulated. The elongate bar 13 is substantially "L"-shaped with a larger longitudinal branch 13a for connection to the plates 15, and a smaller transverse branch 13b which has, at its end, a hook 16 or a ball joint, both of a generally known type, for connecting an item of agricultural equipment to the lower arm of the three-point hitch. The elongate bar 14 in turn comprises a longitudinal branch 14b terminating in the connection to the ball joint 19, and an inclined branch 14a for connection to the plates 15, which is generally arranged in an angled manner relative to the longitudinal direction defined by the branch 13a.

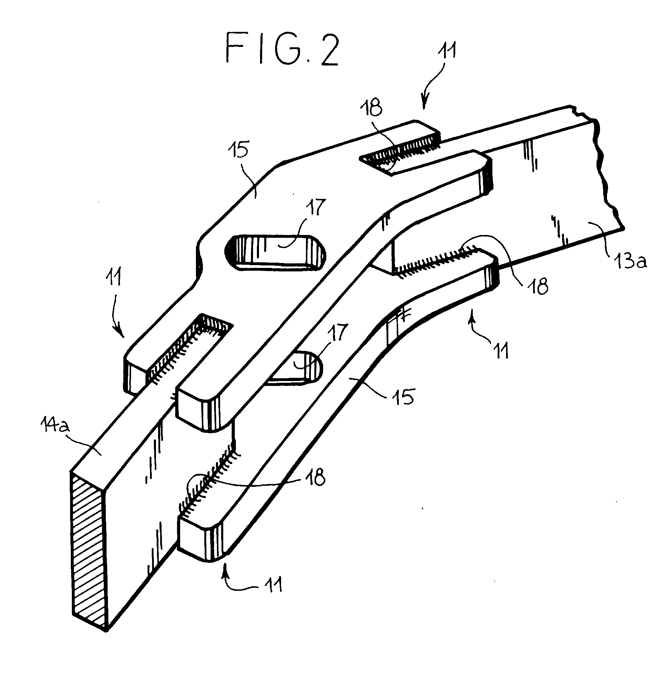

As illustrated in Figure 2, each shaped plate 15 has, in plan, a curved or bent shape, with two end connection regions, generally indicated by the reference numeral 11, for connecting the plate 15 to the elongate bars 13, 14. The connection regions 11 are generally angled relative to one another.

In each connection region 11, the plates 15 have two notches 18 in which the ends of the branches 13a and 14a of the bars 13, 14 are inserted and secured, preferably by welding, as clearly shown in Figure 2, in such a manner that the plates 15 define a laterally open portion of lower arm 10 for the insertion of the end 12b of the lateral stabiliser 12.

In particular, in the preferred embodiment illustrated in the drawings, the plates 15 have two respective vertically aligned slots 17 in which is inserted a pin 22 (see Figure 1) which holds the end 12b of the lateral stabiliser 12, which in this case comprises a connection eye or ring. Naturally, once the principle of the invention has been understood, an expert in the field can readily identify equivalent and at any rate functionally analogous means for connecting the stabiliser 12 to the lower arm 10, and in particular to the plates 15.

The pin-slot connections of the ends of the lateral stabilisers 12 to the lower arms 10 act as mechanical travel limits for the lateral oscillation of the item of agricultural equipment, the width of which oscillation is defined by the length to which the lateral stabilisers 12 are brought. Owing to the fact that the distance between the hooks 16 is determined by the width of the couplings on the item of agricultural equipment, it is possible to place the lateral stabilisers 12 under a traction sufficient to cause both pins 22 to abut the edges of the slots 17. In that state, the item of agricultural equipment is not able to oscillate laterally and its lateral position is strictly determined by the relative length assumed by the lateral stabilisers. As the length of one or both of the lateral stabilisers 12 increases, the item of agricultural equipment becomes progressively free to oscillate laterally, up to a maximum determined by the length of the slots 17. The mechanical travel-limit feature provided by the above-mentioned pin-slot connections enables the lateral stabilisers 12 to be operated only in manoeuvres for adjusting the lateral position and the oscillation width of the item of agricultural equipment. Naturally, functioning analogous to that described above takes place in the opposite case in which the lateral stabilisers operate by compression instead of by traction, and irrespective of whether hydraulic or mechanical lateral stabilisers are adopted.

The above-described configuration of the lower arms 10 is particularly suitable for making optimum use of the - small - space available in the rear portion of a special narrow tractor, in order to guarantee ample oscillation possibilities for the arms 10 and consequently for the hooks 16 which can thus pass along the arcs A indicated in Figure 1 by a dot-dash line. The two coupling points of each lower arm 10, to the tractor and to the towed item of agricultural equipment, respectively, and the coupling point of each lateral stabiliser 12 to the corresponding arm 10 are substantially aligned in order to minimise the bending stresses caused by the kinematic motion when, during use, the item of agricultural equipment swings laterally.

The adoption of the plates 15 enables the lateral space requirement of the system of lower arms described above to be reduced, since the space that would otherwise be occupied by the width of the elongate bars 13, 14, as is normally the case in traditional systems of known type, is also used. The adoption of a pin-slot connection also enables the space requirement in the region where the lateral stabiliser 12 is attached to the respective lower arm 10 to be reduced, thus increasing the path usable for lateral oscillation of the arm 10.

An additional advantage of the system described above is provided by the good resistance to lateral bending of the arm 10 in the region of the plates 15, where the lateral stresses are greater owing to the thrust exerted by the stabilisers 12. Another advantageous feature resides in the ease of coupling and uncoupling the stabilisers 12, which is useful, for example, for easier maintenance thereof, despite the really limited room for manoeuvre available in the rear portion of the special narrow tractor.

Naturally, the principle of the invention remaining the same, the forms of embodiment and details of construction may be varied widely with respect to those described and illustrated, which have been given purely by way of example, without thereby departing from the scope of the invention.

## Claims

1. A system of lower arms for three-point hitches, having lateral stabilisers, in particular for special narrow-track tractors, comprising two lower lateral arms (10) and two respective lateral stabilisers (12), characterised in that, in the connection region between a lateral stabiliser (12) and a respective lower arm (10), the lower arm has a laterally open portion.

2. A system of arms according to claim 1, characterised in that the laterally open portion of each lower arm (10) is defined by a pair of parallel and spaced plates (15) which are secured to two opposing elongate bars (13, 14).

3. A system of lower arms for three-point hitches having lateral stabilisers, in particular for special narrow-track tractors, comprising two lower lateral arms (10) and two respective lateral stabilisers (12), characterised in that each lateral stabiliser (12) is connected to the respective lower arm (10) by means of a pin-slot connection.

4. A system of arms according to claim 3, characterised in that the slot (17) is located in the lower arm (10).

5. A system of arms according to claim 4, characterised in that each lower arm (10) comprises two elongate bars (13, 14) which are connected by a pair of vertically spaced transverse plates (15) in which arc formed the two corresponding vertically aligned slots (17) for the insertion of a pin (22) for connecting the lateral stabiliser (12).
